# FASCICULE DE BREVET EUROPEEN

(11) **EP 0 672 690 B1**
(45) Date de publication et mention de la délivrance du brevet: **17.06.1998**
(21) Numéro de dépôt: 95400519.5
(22) Date de dépôt: 10.03.1995
(51) Int. Cl.: C08F 8/30

(54) **Résines acrylate-styrènes réticulées par un polyisocyanate bloqué, préparation et applications comme peinture et/ou vernis**
Durch blockierte Polyisocyanate vernetzte Acrylat-Styren-Harze, Herstellung und Verwendung zu Farben und/oder Lacken
Acrylate-Styrene resins crosslinked by blocked polyisocyanates, manufacture and use thereof as paints and/or lacqueurs

(30) Priorité: 14.03.1994 FR 9402933
(43) Date de publication de la demande: 20.09.1995
(73) Titulaire: VIANOVA RESINS, Société Anonyme, 21602 LONGVIC (FR)
(72) Inventeur: Coyard, Henri, F-60560 Orry la Ville (FR); Deligny, Philippe, F-78620 l'Etang la Ville (FR)
(74) Mandataire: Rinuy, Santarelli

(56) Documents cités:
- EP-A- 0 159 117
- EP-A- 0 326 984
- EP-A- 0 365 098
- EP-A- 0 522 306
- WO-A-93/05099
- US-A- 5 286 782

## Description

La présente invention a pour objet des résines, un procédé pour leur préparation et leurs applications dans la préparation de peinture et/ou vernis.

On connaît de très nombreuses résines destinées à la préparation de peinture et/ou vernis, à base d'un polymérisat de monomères acryliques et/ou vinyliques réticulé avec un ou plusieurs polyisocyanates bloqués transitoirement avec des dérivés aminés tels que les oximes, les benzimidazoles, les pyrazoles (cf notamment EP-A-159 117). Ces résines connues lorsqu'elles sont employées dans la formulation de peintures et/ou de vernis, fournissent des films qui, après séchage, présentent une tenue satisfaisante aux intempéries, mais qui sont facilement attaqués par les fientes et aisément rayés lors de leur lavage avec des brosses telles que celles utilisées dans le lavage des carrosseries automobiles.

Afin de remédier à ces inconvénients, la demanderesse a découvert avec étonnement de nouvelles résines conduisant à des peintures et/ou des vernis donnant des films stables vis à vis des fientes, difficilement rayés par les brosses, résistant aux attaques chimiques (essence, produits pour l'entretien automobile), ne jaunissant pas par exposition à la lumière et présentant par ailleurs une excellente tenue aux intempéries.

L'invention a pour objet des résines, désignées Re, à base d'un copolymérisat, désigné P, réticulé par un polyisocyanate désigné Is, partiellement et transitoirement bloqué à l'état d'urée par un dérivé aminé, caractérisées par le fait
i) que le polymérisat P est à base de styrène, St, d'au moins deux monomères acryliques de formule (I),

   H₂C = C(R) - COOR₁ (I)

   dans laquelle R représente un atome d'hydrogène ou un radical méthyle, R₁ représente un atome d'hydrogène, un radical alcoyle en C₁-C₁₄, linéaire ou ramifié, un radical hydroxyalcoyle en C₁-C₄, et parmi lesquels au moins un de ces monomères acryliques possède un groupement hydroxyle, et d'au moins un ester vinylique d'un acide trialkylacétique en C₉-C₁₉,
ii) que le polyisocyanate est choisi dans le groupe des polyisocyanates aliphatiques de formule (II)

   O = C = N - A - N = C = O (II)

   dans laquelle A représente un groupement alcoylène linéaire ou ramifié en C₄-C₁₀ et des polyisocyanates cycliques aromatiques ou cycloaliphatiques et
iii) que ce polyisocyanate est partiellement et transitoirement bloqué sous forme d'urée par un groupement pyrazole de formule (III) 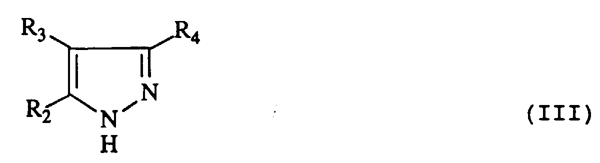 dans laquelle R₂, R₃ et R₄, différents ou identiques, représentent un atome d'hydrogène ou un groupement alcoyle en C₁-C₄.

L'expression "alcoyle en C₁-C₁₄" peut désigner par exemple un radical méthyle, éthyle, n-propyle, méthyléthyle, n-butyle, 1-méthylpropyle, 2-méthylpropyle, 1,1-diméthyléthyle, pentyle, 2-méthylbutyle, 2,2-diméthylpropyle, hexyle, éthyl-2 hexyle, lauryle, tétradécyle.

L'expression "hydroxyalcoyle en C₁-C₄" peut désigner par exemple un radical hydroxyméthyle, hydroxyéthyle, hydroxypropyle, hydroxybutyle.

L'expression "acide trialkylacétique en C₉-C₁₉" peut désigner par exemple les acides versatic issus de la transformation d'oléfine par la synthèse de KOCH, tels que l'acide néononanoïque, l'acide tert-décanoïque.

L'expression "alcoylène linéaire ou ramifié en C₄-C₁₀" peut désigner par exemple une groupement (̵ CH₂ )̵ₙ dans lequel n représente un nombre de 4 à 10, un groupement triméthylhexaméthylène.

L'expression "polyisocyanates cycliques aromatiques ou cycloaliphatiques" peut désigner par exemple le cyclohexanediisocyanate, l'isophoronediisocyanate, le méthylènedicyclohexylisocyanate, le p-phénylènediisocyanate, le 2,4-(ou 2,6) diisocyanatotoluène ou leurs mélanges, le naphtylènediisocyanate, le dianisidinediisocyanate, le méthylènediphényldiisocyanate, le polyméthylènepolyhexylisocyanate, la tris(isocyanato-6 hexyl)-1,3,5 trioxo-2,4,6 s-triazine ou acide tris(isocyanato-6 hexyl)-1,3,5 isocyanurique.

L'expression "alcoyle en C₁-C₄" peut désigner par exemple un groupement méthyle, éthyle, n-propyle, n-butyle, isopropyle.

L'invention a plus particulièrement pour objet les résines telles que définies ci-dessus caractérisées par le fait que le polymérisat est à base de styrène, d'acide acrylique, de néononanoate de vinyle, de (méth)acrylate d'hydroxy-2 éthyle et d'au moins un (méth)acrylate d'alcoyle en C₁-C₁₄. Parmi ces dernières résines, l'invention a notamment pour objet les résines définies ci-dessus caractérisées en ce que le polyisocyanate est la tris(isocyanato-6 hexyl)-1,3,5 trioxo-2,4,6 s-triazine partiellement et transitoirement bloquée sous forme d'urée par le diméthyl-3,5 pyrazole.

Parmi ces résines, on peut citer plus particulièrement les résines telles que définies ci-dessus, caractérisées en ce que le polymérisat est à base de styrène, d'acide acrylique, d'acrylate d'hydroxy-2 éthyle, d'acrylate d'éthyl-2 hexyle, d'acrylate de tertiobutyle, de méthacrylate de méthyle et de néononanoate de vinyle et que le polyisocyanate partiellement et transitoirement bloqué est la tris(isocyanato-6 hexyl)-1,3,5 trioxo-2,4,6 s-triazine dont 60 % environ des fonctions isocyanates sont bloquées par le diméthyl-3,5 pyrazole. Parmi ces dernières résines, on peut citer notamment celles caractérisées par le fait que le polymérisat contient, en proportions molaires, environ 20 % de styrène, 15 % de méthacrylate de méthyle, 35 % d'acrylate d'hydroxy-2 éthyle, 5 % d'acrylate d'éthyl-2 hexyle, 10 % d'acrylate de tertiobutyle, 2 % d'acide acrylique et 18 % de néononanoate de vinyle, que la réticulation est réalisée par environ 6 % en proportions molaires par rapport aux monomères avec la tris(isocyanato-6 hexyl)-1,3,5 trioxo-2,4,6 s-triazine bloquée à 60 % environ par du diméthyl-3,5 pyrazole.

Selon une variante de l'invention, une partie du diméthyl-3,5 pyrazole peut être remplacée par des quantités équivalentes de méthyl éthylcétoxime (MECO). Tout en conservant les propriétés applicatives décrites ci-dessus, on peut remplacer jusqu'à 50 % du diméthyl-3,5 pyrazole par de la MECO.

Selon l'invention, les résines définies ci-dessus peuvent être préparées par un procédé caractérisé par le fait que
i) l'on prépare un polymérisat en solution dans un solvant organique en copolymérisant en solution dans ledit solvant organique, à une température supérieure à 100°C, en présence d'un ou plusieurs agents donneurs de radicaux libres, les monomères choisis dans des proportions désirées puis, lorsque la polymérisation est terminée,
ii) l'on mélange la solution obtenue contenant ce polymérisat, à une température inférieure ou égale à 80°C, avec le produit de réaction du polyisocyanate sélectionné bloqué partiellement et transitoirement avec un pyrazole de formule (III), ladite réaction de blocage étant effectuée extemporanément à une température inférieure ou égale à 80°C, pour obtenir la résine correspondante en solution dans ledit solvant organique.

L'expression solvant organique peut désigner, par exemple, un hydrocarbure aromatique, ou un mélange d'hydrocarbures aromatiques présentant un point d'ébullition supérieur à 100°C.

Dans des conditions préférentielles de mise en oeuvre de l'invention, le procédé ci-dessus est réalisé de la manière suivante :
- la préparation du polymérisat est réalisée à une température comprise entre 125°C et 175°C, en présence d'un ou plusieurs esters d'alcoyle de peracide organique tels qu'un perbenzoate d'alcoyle, ou de peroxydes d'alcoyle tels que le ditertiobutylperoxyde, et en solution dans un mélange d'hydrocarbures aromatiques présentant un point d'ébullition de 170 ± 10°C. Dans des conditions avantageuses, la polymérisation est effectuée en présence de 1 à 5 % en proportions molaires par rapport aux monomères, d'un perbenzoate d'alcoyle, présentant une demie durée de vie d'environ 10 minutes à 130-150°C, et la réaction de polymérisation est effectuée dans une quantité de solvant telle que la viscosité GARDNER, déterminée à 25°C, de la solution obtenue contenant le polymérisat soit inférieure à 800 cst ;
- la réaction de blocage partielle et transitoire du polyisocyanate est réalisée en mélangeant à une température inférieure à 50°C la quantité désirée de pyrazole de formule (III) choisi, et éventuellement d'un second groupe protecteur des isocyanates, avec le polyisocyanate désiré en solution dans un solvant organique tel que le mélange d'hydrocarbures aromatiques choisi pour préparer le polymérisat décrit ci-dessus ;
- la préparation de la résine est réalisée à une température inférieure à 60°C, par simple mélange des solutions contenant le polymérisat et le polyisocyanate partiellement et transitoirement bloqué, le milieu réactionnel étant maintenu à une température inférieure à 60°C jusqu'à disparition des groupements isocyanates libres. On peut opérer également en présence d'un catalyseur tel qu'un sel d'étain comme le sel de lauryle de dibutylétain. Avantageusement, on ajuste la quantité de solvants organiques utilisée de manière à ce que la solution contenant la résine finale présente une viscosité GARDNER, déterminée à 25°C selon la norme ASTM D 600-73, inférieure ou égale à 2700 cst.

Les résines selon l'invention présentent d'intéressantes propriétés dans l'obtention de vernis ; elles manifestent notamment à l'état de films minces, après un chauffage de quelques minutes à une température supérieure à 130°C, une excellente tenue aux agents chimiques tels que les acides minéraux ou organiques, les huiles diverses, les solvants organiques, ainsi qu'aux fientes et une très bonne résistance aux rayures telles celles occasionnées aux automobiles lors des lavages par les brosses notamment rotatives ; en outre, elles ne jaunissent par exposition à la lumière.

Ces propriétés justifient leur application dans la préparation de vernis et/ou peinture notamment pour l'industrie automobile. L'invention a également pour objet leur application dans la formulation de peinture et/ou de vernis.

L'invention a également pour objet les peintures et/ou les vernis qui contiennent au moins une résine selon l'invention. Ces peintures et/ou vernis peuvent être réalisés conventionnellement de manière à pouvoir être appliqués sur une surface à traiter à la brosse, au pistolet ou par tout autre moyen connu de l'homme du métier. Outre une ou plusieurs résines selon l'invention, ces peintures ou vernis peuvent contenir les additifs habituellement employés dans ce type de produit tels que charges, absorbeurs de rayons ultraviolets, agents siliconnés, émulsifiants, opacifiants.

La présente invention a également pour objet un procédé de protection d'une surface, caractérisée en ce que l'on applique sur ladite surface une épaisseur suffisante d'un vernis ou d'une peinture contenant une résine telle que définie ci-dessus.

Les exemples donnés ci-après illustrent l'invention sans toutefois la limiter.

### EXEMPLE 1

### 1.1 Préparation d'un polymérisat

On mélange sous agitation à la température ambiante :
- 182 mmoles (18,9 g) de styrène (St),
- 153 mmoles (15,3 g) de méthacrylate de méthyle (MM),
- 328 mmoles (38,1 g) d'acrylate d'hydroxy-2 éthyle (AHE),
- 48 mmoles (8,85 g) d'acrylate d'éthyl-2 hexyle (AEH),
- 99 mmoles (12,7 g) d'acrylate de tertiobutyle (ATB),
- 17 mmoles (1,22 g) d'acide acrylique (AA),
- 172 mmoles (31,7 g) de néononanoate de vinyle (VV).

On introduit dans ce mélange :
- 33,8 mmoles (6,5 g) de perbenzoate de tertiobutyle, puis il est introduit goutte à goutte, sous agitation, dans :
- 85,3 g d'un mélange d'hydrocarbures aromatiques présentant un point d'ébullition de 170 ± 10°C maintenus à une température d'environ 160°C.

L'introduction terminée, on maintient le milieu réactionnel 1 heure à 160°C, puis on le refroidit à la température ambiante. On obtient ainsi environ 219 g d'une solution, présentant un viscosité GARDNER d'environ 550 cst (déterminée à 25°C selon la norme ASTM D 600-73) et contenant environ 58 % en poids d'un polymérisat P₁ constitué par un copolymère St-MM-AHE-AEH-ATB-AA-VV, 18,2 / 15,3 / 32,8 / 4,8 / 9,9 / 1,7 / 17,2 en proportions molaires, présentant un indice d'acide d'environ 18 (mg de KOH par g) et un indice d'hydroxyle d'environ 140 (mg de KOH par g).

### 1.2 Préparation d'un polyisocyanate transitoirement et partiellement bloqué

On mélange sous agitation à la température ambiante 64,25 mmoles (32,4 g) de tris(isocyanato-6 hexyl)-1,3,5 trioxo-2,4,6 s-triazine dans 21,55 g d'un mélange d'hydrocarbures aromatiques présentant un point d'ébullition Eb = 170 ± 10°C, puis on introduit dans cette solution agitée, en maintenant la température du milieu réactionnel inférieure à 50°C, 116 mmoles (11,1 g) de diméthyl-3,5 pyrazole. Lorsque l'introduction est terminée, on maintient le milieu réactionnel sous agitation à 50°C pendant 30 minutes.

On obtient environ 65,1 g d'une solution S, contenant environ 67 % en poids d'un mélange de tris [(pyrazin-1yl carbonylamino)-6 hexyl]1,3,5 trioxo-2,4,6 s-triazine et de tris(isocyanoto-6 hexyl)-1,3,5 trioxo-2,4,6 s-triazine, environ 60/40 en proportions molaires.

### 1.3 Préparation de résine

On mélange, sous agitation, à la température ambiante, 219 g de la solution contenant le polymérisat P₁, préparé précédemment à l'exemple 1.1, avec 65,1 g de la solution S, préparée à l'exemple 1.2. Dans la solution obtenue, on introduit 0,15 g de laurate de dibutylétain, puis on la chauffe à une température inférieure ou égale à 60°C jusqu'à la disparition des fonctions isocyanates que l'on suit par des prélèvements régulier d'un échantillon que l'on dose en retour avec une solution aqueuse d'acide chlorhydrique 1M après traitement avec un excès de dibutylamine.

Après refroidissement à la température ambiante, on obtient environ 284 g d'une solution présentant une viscosité GARDNER, déterminée à 25°C, de 2000 ± 500 cst, et contenant environ 60 % en poids d'un polymérisat constitué par un copolymère St-MM-AHE-AEH-ATB-AA-VV, 18,2 / 15,3 / 32,8 / 4,8 / 9,9 / 1,7 / 17,2 en proportions molaires, et réticulé par, en proportions molaires par rapport aux monomères, environ 6 % de tris(isocyanoto-6 hexyl)-1,3,5 trioxo-2,4,6 s-triazine dont environ 60 % des groupements isocyanates sont bloqués par du diméthyl-3,5 pyrazole et présentant un indice d'acide d'environ 12 ± 3 (mg de KOH par g de produit sec), un taux de groupements isocyanate inférieur à 0,05 %.

### 1.4 Préparation d'un vernis de finition pour peinture automobile.

La résine préparée en 1.3 de l'exemple 1 est utilisée pour formuler un vernis de finition selon la formulation suivante :

| | | |
|---|---|---|
| i) | résine selon 1-3 | 59 % |
| ii) | MAPRENAL VMF (HOECHST AG) : | 22 % |
| ou | LUWIPAL 016 (BASF) (résine de mélamine formol) dosée à 67 % de matière sèche. | |
| iii) | TINUVIN 292 ou TINUVIN 900 (CIBA-GEIGY) : | 1 % |
| | (absorbeur d'UV) | |
| iv) | OL 44 (BAYER) (agent tensioactif) : | 0,5 % |
| v) | SOLVESSO 100 ou SOLVESSO 150 | |
| | (solvant aromatique) : | 16 % |
| vi) | BUTANOL 1 : | 1,5 % |

Ce vernis est appliqué au pistolet sur des surfaces métalliques qui sont ensuite étuvées pendant 20 ± 10 minutes à 145 ± 15°C. On obtient ainsi un film d'une épaisseur comprise entre 25 et 50 µm.

### EXEMPLES COMPARATIFS 2, 3 et 4

Les mêmes expériences sont reproduites selon les procédés décrits dans l'exemple 1 en utilisant à la place de l'isocyanate :
- la méthyl éthyl cétoxime : exemple 2,
- la ε-caprolactame : exemple 3,
- le butanol primaire : exemple 4.

### EXEMPLE COMPARATIF 5

On reproduit l'exemple 1-4 en utilisant à la place de la résine acrylique préparée selon 1.1 à 1.3 une résine commerciale Synthacryl E 2701 (HOECHST).

Les produits obtenus dans les exemples 1 à 5 sont soumis aux tests I à X. Les résultats sont consignés dans le tableau N°1.

### EXEMPLE 6

On reproduit les mêmes expériences que dans l'exemple 1 au départ de 87 mmoles (8,35 g) de diméthyl-3,5 pyrazole et de 29 mmoles (2,53 g) de MECO.

### I. Dureté pendulaire selon PERSOZ

Les mesures de dureté sont effectuées sur le support revêtu de vernis à l'aide d'un pendule de PERSOZ, conformément à la norme française NFT 30-016 dans une enceinte thermostatée et hygrostatée (température 23°C, humidité relative 60 %).

### II. Mesure du brillant spéculaire

Dans une enceinte thermostatée et hygrostatée (température 23°C, humidité relative 60 %), on mesure le coefficient de réflexion spéculaire sous des angles d'incidences de 20° et de 60°, selon la norme française NFT 30-064.

### III. Détermination de la résistance à l'eau.

On mesure la résistance à l'eau des vernis appliqués sur leur support par immersion d'éprouvettes dans de l'eau déionisée de conductivité inférieure à 0,2 mS/m.

Cette eau étant réglée à une température de 40°C, l'immersion se fait pendant 21 jours.

La cotation ira de 0 à 5, 0 étant un film de vernis complètement inaltéré, et 5 étant un film de vernis totalement détruit.

Ces éprouvettes sont examinées après essuyage et séchage 2 heures après la sortie de l'eau.

### IV. Résistance à l'essence dite super.

Sur les éprouvettes vernies, on applique un coton imbibé d'essence super du commerce que l'on laisse au contact pendant 5 minutes. Une fois le coton retiré, on expose cette surface pendant 5 minutes au rayonnement d'une lampe infrarouge, puis on note les différences d'aspect, de teinte, de tachage ...

La cotation va de 0 à 5, 0 étant un film intact, et 5 étant un film fortement marqué, voire détruit. Ce test est effectué dans une enceinte réglée en humidité relative à 60 %, et thermostatée à 23°C.

### V. Résistance au gasoil

Sur les éprouvettes vernies, on applique un coton imbibé de gasoil du commerce que l'on laisse en contact pendant 5 minutes. Une fois le coton retiré, on expose cette surface pendant 5 minutes au rayonnement d'une lampe infrarouge, puis on note les différences d'aspect, de teinte, de tachage ...

La cotation va de 0 à 5, 0 étant un film intact, et 5 étant un film fortement marqué, voire détruit. Ce test est effectué dans une enceinte réglée en humidité relative à 60 %, et thermostatée à 23°C.

### VI. Résistance au liquide de lave-glaces

Sur les éprouvettes vernies, on applique un coton imbibé de liquide lave-glaces du commerce, utilisé pour le lavage des vitres de véhicules automobiles, que l'on laisse en contact pendant 5 minutes. Une fois le coton retiré, on expose cette surface pendant 5 minutes au rayonnement d'une lampe infrarouge, puis on note les différences d'aspect, de teinte, de tachage ...

La cotation va de 0 à 5, 0 étant un film intact, et 5 étant un film fortement marqué, voire détruit. Ce test est effectué dans une enceinte réglée en humidité relative à 60 %, et thermostatée à 23°C.

### VII. Résistance au xylène

Sur les éprouvettes vernies, on applique un coton imbibé de xylène que l'on laisse au contact pendant 5 minutes. Une fois le coton retiré, on expose cette surface pendant 5 minutes au rayonnement d'une lampe infrarouge, puis on note les différences d'aspect, de teinte, de tachage ...

La cotation va de 0 à 5, 0 étant un film intact, et 5 étant un film fortement marqué, voire détruit. Ce test est effectué dans une enceinte réglée en humidité relative à 60 %, et thermostatée à 23°C.

### VIII. Tenue à l'acide sulfurique

Ce test est effectué par immersion d'éprouvettes recouvertes de vernis dans une solution d'acide sulfurique à 30 % pendant 16 heures, à une température de 25°C ± 0,1°C.

Une fois ces éprouvettes sorties, elles sont soigneusement rincées à l'eau, séchées pendant une heure, puis examinées.

La cotation va de 0 à 5, 0 représentant un film intact, et 5 représentant un film totalement détruit.

### IX. Résistance à la rayure

L'éprouvette revêtue de vernis est soumise à l'action d'une brosse de lavage dont les poils sont en polyéthylène. Cette brosse a une vitesse de rotation de 150 t/mn.

Entre l'éprouvette et les poils, on distribue une solution d'alumine à 2 % dans l'eau distillée additionnée de tensioactifs.

Le lavage s'effectue pendant deux cycles de 10 minutes avec un lavage à l'eau intermédiaire entre ces deux cycles.

On mesure avant la réalisation du test le brillant spéculaire sous un angle de 20° et on effectue une seconde mesure de brillant une fois le test terminé.

Cet essai est effectué à 23°C ± 2 avec une humidité relative de 50 % ± 5 après conditionnement des plaques pendant 24 heures.

La valeur exprimée correspond à la rétention de brillant.

La perte de brillant est égale à 100 fois le quotient de la valeur de brillant spéculaire à 20° avant essai diminuée de la valeur de brillant après essai, par la valeur de brillant avant essai.

Cette méthode est celle utilisée par les constructeurs français (Régie Nationale des Usines RENAULT, PEUGEOT, CITROEN) et est encore évolutive.

### X. Test de vieillissement

Les éprouvettes revêtues de vernis appliqué sur une base blanche sont exposées pendant 1000 heures dans un appareil de vieillissement artificiel muni de lampes au xénon de 2500 W.

Après test, on va mesurer les pertes en brillant spéculaire, noter les craquelures éventuelles du film de vernis, et les différences colorimétriques dues au jaunissement éventuel du film.

0 indique une absence totale de jaunissement.

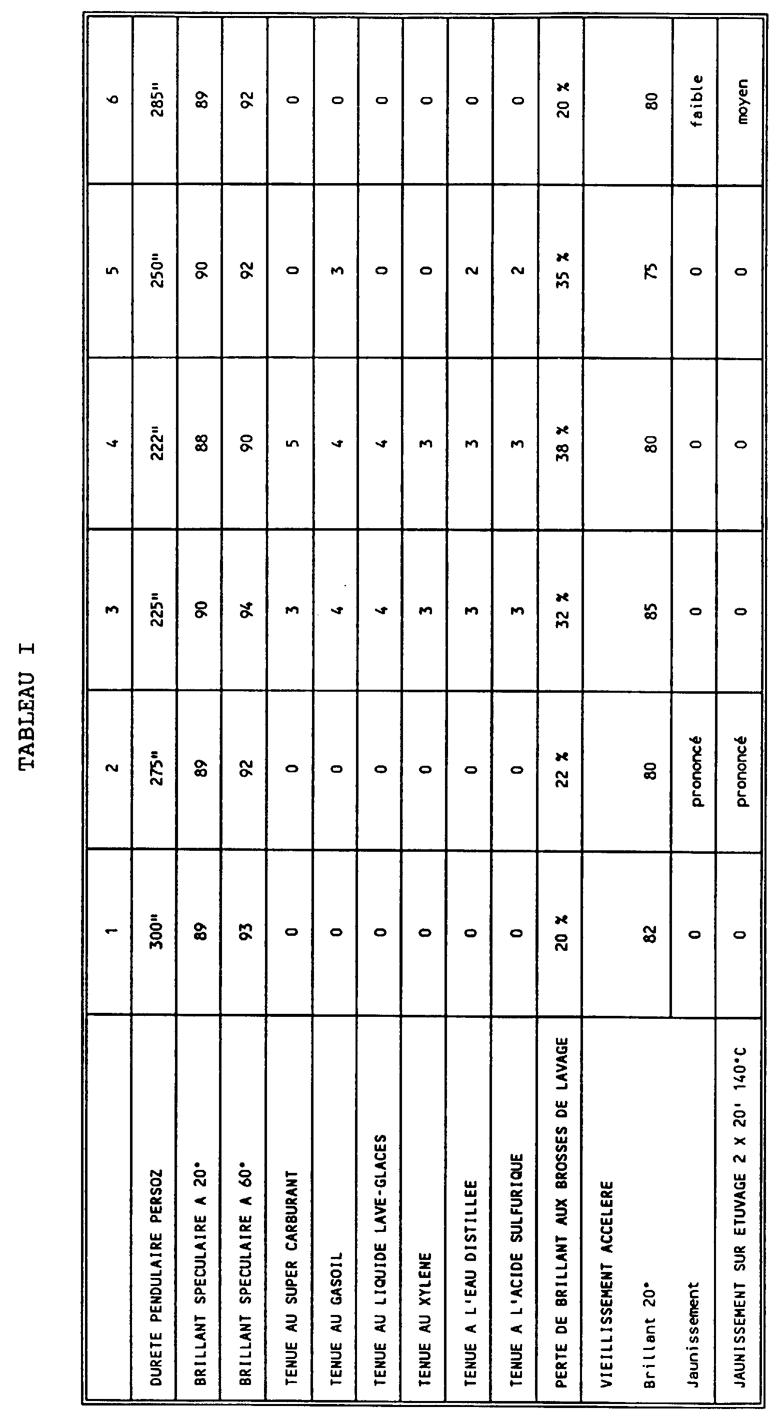

## Revendications

1. Résine à base d'un copolymérisat réticulé par un polyisocyanate désigné Is, partiellement et transitoirement bloqué à l'état d'urée par un dérivé aminé, caractérisée par le fait
i) que le polymérisat P est à base de styrène, St, d'au moins deux monomères acryliques de formule (I),
H₂C = C(R) - COOR₁ (I)
dans laquelle R représente un atome d'hydrogène ou un radical méthyle, R₁ représente un atome d'hydrogène, un radical alcoyle en C₁-C₁₄, linéaire ou ramifié, un radical hydroxyalcoyle en C₁-C₄, et parmi lesquels au moins un de ces monomères acryliques possède un groupement hydroxyle, et d'au moins un ester vinylique d'un acide trialkylacétique en C₉-C₁₉,
ii) que le polyisocyanate est choisi dans le groupe des polyisocyanates aliphatiques de formule (II)
O = C = N - A - N = C = O (II)
dans laquelle A représente un groupement alcoylène linéaire ou ramifié en C₄-C₁₀ et des polyisocyanates cycliques aromatiques ou cycloaliphatiques et
iii) que ce polyisocyanate est partiellement et transitoirement bloqué sous forme d'urée par un groupement pyrazole de formule (III) 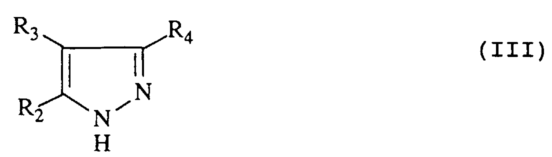 dans laquelle R₂, R₃ et R₄, différents ou identiques, représentent un atome d'hydrogène ou un groupement alcoyle en C₁-C₄.

2. Résine selon la revendication 1, caractérisée en ce que le polymérisat est à base de styrène, d'acide acrylique, de néononanoate de vinyle, de (méth)acrylate d'hydroxy-2 éthyle et d'au moins un (méth)acrylate d'alcoyle en C₁-C₁₄.

3. Résine selon l'une quelconque des revendications 1 et 2, caractérisée en ce que le polyisocyanate est la tris(isocyanato-6 hexyl)-1,3,5 trioxo-2,4,6 s-triazine partiellement et transitoirement bloquée sous forme d'urée par le diméthyl-3,5 pyrazole.

4. Résine selon l'une quelconque des revendications 1 à 3, caractérisée en ce que le polymérisat est à base de styrène, d'acide acrylique, d'acrylate d'hydroxy-2 éthyle, d'acrylate d'éthyl-2 hexyle, d'acrylate de tertiobutyle, de méthacrylate de méthyle et de néononanoate de vinyle et que le polyisocyanate partiellement et transitoirement bloqué est la tris(isocyanato-6 hexyl)-1,3,5 trioxo-2,4,6 s-triazine dont 60 % environ des fonctions isocyanates sont bloquées par le diméthyl-3,5 pyrazole.

5. Résine selon l'une quelconque des revendications 1 à 4 caractérisée par le fait que le polymérisat contient, en proportions molaires, environ 20 % de styrène, 15 % de méthacrylate de méthyle, 35 % d'acrylate d'hydroxy-2 éthyle, 5 % d'acrylate d'éthyl-2 hexyle, 10 % d'acrylate de tertiobutyle, 2 % d'acide acrylique et 18 % de néononanoate de vinyle, que la réticulation est réalisée par environ 6 % en proportions molaires par rapport aux monomères avec la tris(isocyanato-6 hexyl)-1,3,5 trioxo-2,4,6 s-triazine bloquée à 60 % environ par du diméthyl-3,5 pyrazole.

6. Résine selon la revendication 3 ou 4, caractérisée en ce que jusqu'à 50 % du diméthyl-3,5 pyrazole est remplacé par une quantité molaire équivalente de méthyl éthylcétoxime.

7. Procédé de préparation d'une résine selon l'une quelconques des revendications 1 à 6, caractérisé en ce que
i) l'on prépare un polymérisat en solution dans un solvant organique en copolymérisant en solution dans ledit solvant organique, à une température supérieure à 100°C, en présence d'un ou plusieurs agents donneurs de radicaux libres, les monomères choisis dans des proportions désirées puis, lorsque la polymérisation est terminée,
ii) l'on mélange la solution obtenue contenant ce polymérisat, à une température inférieure ou égale à 80°C, avec le produit de réaction du polyisocyanate sélectionné bloqué partiellement et transitoirement avec un pyrazole de formule (III), ladite réaction de blocage étant effectuée extemporanément à une température inférieure ou égale à 80°C, pour obtenir la résine correspondante en solution dans ledit solvant organique.

8. Application d'une résine selon l'une quelconque des revendications 1 à 6 à la formulation de peinture et/ou de vernis.

9. Peinture et/ou vernis contenant une résine telle que définie à l'une quelconque des revendications 1 à 6.

10. Procédé de protection d'une surface, caractérisé en ce que l'on applique sur ladite surface une épaisseur suffisante d'un vernis ou d'une peinture contenant une résine telle que définie à l'une quelconque des revendications 1 à 6.

## Patentansprüche

1. Harz auf der Basis eines Copolymerisates, das mit einem als Is bezeichneten Polyisocyanat vernetzt ist, welches partiell und vorübergehend in harnstoffartigem Zustand durch ein Aminderivat blockiert ist, dadurch gekennzeichnet,
i) daß das Polymerisat P auf Styrol, St, und mindestens zwei Acrylmonomeren der Formel (I)
H₂C = C(R) - COOR₁ (I),
in welcher R ein Wasserstoffatom oder einen Methylrest bedeutet, R₁ ein Wasserstoffatom, einen unverzweigten oder verzweigten C₁-C₁₄-Alkylrest oder einen C₁-C₄-Hydroxyalkylrest bedeutet, wobei mindestens eines dieser Acrylmonomeren eine Hydroxylgruppe aufweist, und mindestens einem Vinylester einer C₉-C₁₉-Trialkylessigsäure basiert,
ii) daß das Polyisocyanat aus der Gruppe aliphatischer Polyisocyanate der Formel (II)
O = C = N - A - N = C = O (II),
in welcher A eine unverzweigte oder verzweigte C₄-C₁₀-Alkylgruppe bedeutet, und aus der Gruppe aromatisch cyclischer oder aliphatisch cyclischer Polyisocyanate ausgewählt ist, und
iii) daß dieses Polyisocyanat partiell und vorübergehend in harnstoffartigem Zustand durch eine Pyrazolgruppe der Formel (III) 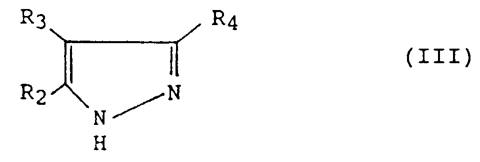 blockiert ist, in welcher R₂, R₃ und R₄, die gleich oder verschieden sein können, ein Wasserstoffatom oder eine C₁-C₄-Alkylgruppe bedeuten.

2. Harz nach Anspruch 1, dadurch gekennzeichnet, daß das Polymerisat auf Styrol, Acrylsäure, Vinylneononanoat, 2-Hydroxyethyl(meth)acrylat und mindestens einem C₁-C₁₄-Alkyl(meth) acrylat basiert.

3. Harz nach einem der Ansprüche 1 und 2, dadurch gekennzeichnet, daß das Polyisocyanat 1,3,5-Tris(6-isocyanatohexyl)-2,4,6-trioxo-s-triazin ist, das partiell und vorübergehend in harnstoffartigem Zustand durch 3,5-Dimethylpyrazol blockiert ist.

4. Harz nach einem der Ansprüche 1 bis 3, dadurch gekennzeichnet, daß das Polymerisat auf Styrol, Acrylsäure, 2-Hydroxyethylacrylat, 2-Ethylhexylacrylat, t-Butylacrylat, Methylmethacrylat und Vinylneononanoat basiert, und daß das partiell und vorübergehend blockierte Polyisocyanat 1,3,5-Tris(6-isocyanato-hexyl)-2,4,6-trioxo-s-triazin ist, von dem etwa 60 % der Isocyanatfunktionen durch 3,5-Dimethylpyrazol blockiert sind.

5. Harz nach einem der Ansprüche 1 bis 4, dadurch gekennzeichnet, daß das Polymerisat in molaren Anteilen etwa 20 % Styrol, 15 % Methylmethacrylat, 35 % 2-Hydroxyethylacrylat, 5 % 2-Ethylhexylacrylat, 10 % t-Butylacrylat, 2 % Acrylsäure und 18 % Vinylneononanoat enthält, und daß die Vernetzung zu etwa 6 % in molaren Anteilen, bezogen auf die Monomeren, mit 1,3,5-Tris(6-isocyanato-hexyl)-2,4,6-trioxo-s-triazin, das zu etwa 60 % durch 3,5-Dimethylpyrazol blockiert ist, erfolgt.

6. Harz nach Anspruch 3 oder 4, dadurch gekennzeichnet, daß bis zu 50 % des 3,5-Dimethylpyrazols durch eine äquivalente molare Menge von Methylethylketoxim ersetzt werden.

7. Verfahren zur Herstellung eines Harzes nach einem der Ansprüche 1 bis 6, dadurch gekennzeichnet, daß man
i) ein Polymerisat in Lösung in einem organischen Lösungsmittel herstellt, indem man in Lösung in diesem organischen Lösungsmittel bei einer Temperatur von mehr als 100°C in Gegenwart von einem oder mehreren Radikalstartern die gewählten Monomeren in den gewünschten Verhältnissen copolymerisiert und dann nach beendeter Polymerisation
ii) die erhaltene, dieses Polymerisat enthaltende Lösung bei einer Temperatur unterhalb oder gleich 80°C mit dem Produkt der Umsetzung des gewählten, partiell und vorübergehend mit einem Pyrazol der Formel (III) blockierten Polyisocyanates mischt, wobei die Umsetzung zum Blockieren sofort bei einer Temperatur unterhalb oder gleich 80°C durchgeführt wird, um das entsprechende Harz in Lösung in diesem organischen Lösungsmittel zu erhalten.

8. Verwendung eines Harzes nach einem der Ansprüche 1 bis 6 in der Rezeptur für eine Farbe und/oder einen Lack.

9. Farbe und/oder Lack, die/der ein Harz enthält, das in einem der Ansprüche 1 bis 6 definiert ist.

10. Verfahren zum Schutz einer Oberfläche, dadurch gekennzeichnet, daß man auf die Oberfläche in ausreichender Dicke einen Lack oder eine Farbe aufträgt, der/die ein Harz enthält, wie es in einem der Ansprüche 1 bis 6 definiert ist.

## Claims

1. Resin based on a copolymerizate cross-linked by a polyisocyanate designated Is, partially and transitorily blocked in the form of urea by an amino derivative, characterized by the fact
i) that the polymerizate P is based on styrene, St, at least two acrylic monomers of formula (I),
H₂C = C(R) - COOR1 (I)
in which R represents a hydrogen atom or a methyl radical, R₁ represents a hydrogen atom, a linear or branched C₁-C₁₄ alkyl radical, a C₁-C₄ hydroxyalkyl radical, and amongst which at least one of these acrylic monomers possesses a hydroxyl group, and at least one vinyl ester of a C₉-C₁₉ trialkylacetic acid,
ii) that the polyisocyanate is chosen from the group of aliphatic polyisocyanates of formula (II)
O = C = N - A - N = C = O (II)
in which A represents a linear or branched C₄-C₁₀ alkylene group and cyclic aromatic or cyclic aliphatic polyisocyanates and
iii) that this polyisocyanate is partially and transitorily blocked in the form of urea by a pyrazole group of formula (III) 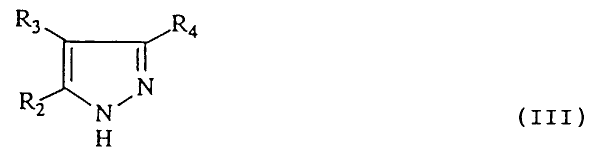 in which R₂, R₃ and R₄, different or identical, represent a hydrogen atom or a C₁-C₄ alkyl group.

2. Resin according to claim 1, characterized in that the polymerizate is based on styrene, acrylic acid, vinyl neononanoate, 2-hydroxy ethyl (meth)acrylate and at least one C₁-C₁₄ alkyl (meth)acrylate.

3. Resin according to any one of claims 1 and 2, characterized in that the polyisocyanate is 1,3,5-tris(6-isocyanato hexyl) 2,4,6-trioxo s-triazine partially and transitorily blocked in the form of urea by 3,5-dimethyl pyrazole.

4. Resin according to any one of claims 1 to 3, characterized in that the polymerizate is based on styrene, acrylic acid, 2-hydroxy ethyl acrylate, 2-ethyl hexyl acrylate, tertiobutyl acrylate, methyl methacrylate and vinyl neononanoate and that the partially and transitorily blocked polyisocyanate is 1,3,5-tris(6-isocyanato hexyl) 2,4,6-trioxo s-triazine about 60% of the isocyanate functions of which are blocked by 3,5-dimethyl pyrazole.

5. Resin according to any one of claims 1 to 4 character-ized by the fact that the polymerizate contains, in molar proportions, about 20% of styrene, 15% of methyl methacrylate, 35% of 2-hydroxy ethyl acrylate, 5% of 2-ethyl hexyl acrylate, 10% of tertiobutyl acrylate, 2% of acrylic acid and 18% of vinyl neononanoate, that the cross-linking is carried out by about 6% in molar proportions relative to the monomers of 1,3,5-tris(6-isocyanato hexyl) 2,4,6-trioxo s-triazine about 60% blocked by 3,5-dimethyl pyrazole.

6. Resin according to claim 3 or 4, characterized in that up to 50% of the 3,5-dimethyl pyrazole is replaced by an equivalent molar quantity of methyl ethylcetoxime.

7. Preparation process for a resin according to any one of claims 1 to 6, characterized in that
i) a polymerizate is prepared in solution in an organic solvent by copolymerizing in solution in said organic solvent, at a temperature greater than 100° C, in the presence of one or more free radical-producing agents, the monomers chosen in the desired proportions then, when the polymerization is complete,
ii) the solution obtained containing this polymerizate, is mixed, at a temperature of less than or equal to 80° C, with the product from the reaction of the selected partially and transitorily blocked polyisocyanate with a pyrazole of formula (III), said blocking reaction being carried out extemporaneously at temperature of less than or equal to 80° C, in order to obtain the corresponding resin in solution in said organic solvent.

8. Use of a resin according to any one of claims 1 to 6 for the formulation of paint and/or lacquer.

9. Paint and/or lacquer containing a resin as defined in any one of claims 1 to 6.

10. Process for the protection of a surface, characterized in that a sufficient thickness of a lacquer or a paint containing a resin as defined in any one of claims 1 to 6 is applied to said surface.
